Europäisches Patentamt

European Patent Office

Office européen des brevets

(11) Veröffentlichungsnummer: **0 096 000**
A1

## (12) EUROPÄISCHE PATENTANMELDUNG

(21) Anmeldenummer: 83810040.2

(22) Anmeldetag: 02.02.83

(51) Int. Cl.³: **H 02 N 11/00**

(30) Priorität: 29.05.82 CH 3292/82

(43) Veröffentlichungstag der Anmeldung: **07.12.83**
**Patentblatt 83/49**

(84) Benannte Vertragsstaaten: **DE FR GB**

(71) Anmelder: **Pfister, Hede, Sonnhaldenstrasse 12, CH-8032 Zürich (CH)**

(72) Erfinder: **Pfister, Hede, Sonnhaldenstrasse 12, CH-8032 Zürich (CH)**

(54) **Elektronischer Radantrieb.**

(57) Der Elektronische Rad-Antrieb integriert die elektrophysikalischen Begriffe «Spannung», «Strom» und «Widerstand» der reinen Elektrotechnik in die Elektronik — bzw. umgekehrt — und verknüpft sie zu einer binären, hochenergetischen Technologie.

Die Bauteile bestehen aus Leitern, Halbleitern und Isolatoren. Vier Schaltblöcke steuern den Fahrplan zur Erzeugung von elektrischer Energie, die umweltfreundlich, ökonomisch und obendrein dezentral nutzbar ist.

Das Prinzip beruht auf der mechanischen Umwälzung von 4 Kreissegmenten durch 4 Kreissektoren in 4 Kreisringen, deren Bewegungsabläufe und Richtungen sich an der Basis der Hauptachsen viermal überschneiden und zwar jeweils im rechten Winkel von 90° ..... dabei wandelt sich die mechanische in elektrische Energie um.

An der Basis — zwischen den abgeschlossenen Systemen der 4 Kreisringe — liegt jeweils eine Grenzzone, die dem nichtabgeschlossenen System angehört. Das offene System des Grenzübergangs schaltet auf Grün und ermöglicht den Transit in die Nachbarbahn: Die Ladungsträger wechseln blitzschnell die Sitzplätze der Fahrzeuge und fahren in entgegengesetzter Richtung weiter. Die freigewordene Energie gilt als Zollgebühr — kassiert wird viermal um den Ring! Das macht den Betrieb autark und mit jeder Kreisumwälzung vermag er — über den Eigenbedarf hinaus — Strom am Laufmeter zu erzeugen wie z.B.

zur Frequenzerhöhung oder zur Speicherung für diverse Anwendungszwecke.

Der Fahrplan des Antriebs wird mit Anregestrom eingeschaltet. Das Rad beginnt sich zu drehen und übernimmt die Energieproduktion aus eigener Kraft, ohne dass von aussen weitere Energie zugeführt werden muss. Ausgeschaltet wird der Fahrplan durch abstoppen der mechanischen Umdrehung und das Rad steht wieder still.

ERA-PROGRAMM

Anmeldung des ELEKTRONISCHEN RADANTRIEBS (ERA)

B e s c h r e i b u n g :

Das Relaisdiagramm von ERA besteht aus vier quadratischen Schaltblöcken mit vier integrierten Schaltkreisen, die sich an der
Basis der Hauptachsen viermal überschneiden. Wichtiges Merkmal:
Die Basisachsen sind zur Nord/Süd, bzw. Ost/Westachse des Koordinatenkreuzes um 26 Grad geneigt, sodass die Regelkreise jeweils
in den nächsten Quadranten übergreifen. Auf jeder Kreisringbahn,
gebildet aus zwei konzentrischen Kreisen mit übereinstimmenden
Mittelpunkt und der Breite b = R - r, steht ein Relaisfahrzeug,
dessen Radachsen senkrecht aufeinanderstehen und durch den gemeinsamen Mittelpunkt von Fahrzeug und Kreisbahn gehen. Der Rahmen
des Fahrzeugs ist gegeben durch das konzentrische Sinus- und
Tangentenquadrat. Der Vierradantrieb besteht aus tetragonalen,
bzw. hexagonalen Halbleitern, deren drei Punkte A, B, C, sich
auf drei Bahnen im Kreisring bewegen. Die trigonometrische Form
des Halbleiters ist bestimmt durch die Winkelsumme des Dreiecks
a, b, c, die gleich der Summe zweier rechter Winkel ist und somit ein "quadratisches Rad" mit zwei energetischen Punkten darstellt,
die ihre Ladungen über die Hypotenuse austauschen. Dies geschieht
aber nur im "angeregten Zustand", wenn der Fahrplan eingeschaltet
ist und die Ladungsträger sich auf der Kreisbahn um ihre eigenen
achsen bewegen - alle in derselben Richtung. Dennoch kollidieren
die jeweils im rechten Winkel mit einem Ladungsträger aus der
Nachbarbahn, der sich in entgegengesetzter Richtung bewegt, weil
die Kreisringe in den Achsen der Basis miteinander vernetzt sind.
Bei jeder Kollision wird durch den Umtausch der Ladungen elektrische
in mechanische Energie umgewandelt und umgekehrt:Der Stromstoss
erfolgt und Energie wird frei - viermal bei einer Umkreisung.

Mit jeder neuen Kreisumdrehung wächst der Winkel Phi ($\varphi$) über 360° hinaus. Dabei wiederholen sich natürlich die Funktionswerte — sowohl in der positiven als auch in der negativen Richtung — immer in der gleichen Reihenfolge. Ins Bogenmass übersetzt bedeutet das, dass Phi ($\varphi$) sämtliche reellen Werte von minus Unendlich bis plus Unendlich annehmen darf, und dass jedem reellen Argument einer Winkelfunktion auch ein Funktionswert entspricht. Jedoch — jeweils an der Basis eines Grenzübergangs — deren Zone die Breite R — r hat, gelten die Regeln der Quantenmechanik: Hier übernimmt die Phi-Funktion den konstanten Wert $2\frac{7}{1}$ eines Gewichtzolls, der nur gleichgrosse und gleich schwere Energiepakete über die Grenze schleust. Analog zum Grenzwert e, wenn n über alle Grenzen wächst, ist "Phi hoch zwei" (zum Quadrat) nur Grenzwert zweier konzentrischer Kreise und ihrer Winkelquadrate, die — ineinander integriert — zu einer binären, hochenergetischen Spannungsquelle werden , die aus eigener Kraft das Elektronengefälle umwälzt und Quanten am laufenden Band erzeugt und abtransportiert. Da konzentrische Kreise und Quadrate einen gemeinsamen Mittelpunkt haben, durch den ihre Durchmesser gehen, bestimmt die Kreiszahl Pi ($\pi$) auch das Verhältnis von Quadratumfang zum Durchmesser, der gleich der Seite des Quadrates ist. Es ist pi zu vier ($\pi/4$). Umfang und Fläche von Kreis und Quadrat verhalten sich wie $\pi$ : 4. Dahinter verbirgt sich die regenerierbare Energiequelle der Basis e (logarithmus naturalis). Der zweite Stein im Brett, mit dem ERA arbeitet, ist der logarithmus dualis — die Basis 2. Sie operiert mit dem "n-Eck", wo n eine Primzahl ist, das ist in diesem Fall ZWEI und der Winkel Phi übernimmt die Funktion der E r z e u g e n d e n , die in kleinen Quanten rechnet — aber ihr ERZEUGNIS INS UNENDLICHE v e r d o p p e l t -

So übernimmt die "Funktion Phi" $\left(1 + \dfrac{1}{\varphi}\right)^2$

im mathematischen Programm von ERA die s c h ö p f e r i s c h e

Aufgabe, im G o l d e n e n  S c h n i t t  Energiepakete am

laufenden Band zu produzieren, indem sie entlang einer ebenen

Grundfläche gleitet, bestimmte Bewegungen ausführt und dadurch reguläre Polyeder (Platonische Körper) erzeugt und zwar immer Zwillinge, die miteinander kontaktieren - "angeregt spinen" !

Zuerst zeichnet sie einen Würfel der Kantenlänge a, dann beschreibt sie einen Oktaeder ein, sodass die Ecken des Oktaeders im Schnittpunkt der Flächendiagonalen des Würfels liegen. Alle Symetrieebenen schneiden sich im Mittelpunkt M beider Körper, der damit gleichzeitig Mittelpunkt einer einbeschriebenen und einer umbeschriebenen Kugel ist. Auf der ersteren liegen alle Mittelpunkte der Polyederflächen, auf der letzteren liegen all Eckpunkte 6 8

und umgekehrt. Diese binäre Konstruktion eines halbregulären 8 6

Körpers wird zum Halbleiter-Kontakt, zur energetischen Spannungsquelle der Wellenmechanik zwecks Quantenproduktion auf mechanischem Wege.

Es gilt der Eulersche Polyedersatz: Bezeichnet e die Zahl der Ecken, k die Zahl der Kanten und f die Zahl der Flächen eines konvexen Polyeders, so ist e + f - k = 2, für ERA 16 + 4 - 16 = 4 Es gilt Carl Friedrich Gauss mit dem "n-Eck", wo n eine Primzahl der Form $2^{2 \cdot k} + 1$ ist.

$$2^{2 \cdot k} + 1 \longrightarrow 2^{2 \cdot 2} + 1 \longrightarrow 4^2 + 1 = 16 + 1$$

Das "energetische n-Eck" absolviert sein Programm im Bogenmass 2 Pi (2π) und wird dabei viermal mit der Kreisfläche "deckungsgleich". Durch die Kontakte im rechten Winkel zerfällt ein Stromstoss und  E n e r g i e  w i r d  f r e i .

Anmeldung des ELEKTRONISCHEN RADANTRIEBS (ERA)

<u>P a t e n t a n s p r u c h :</u>

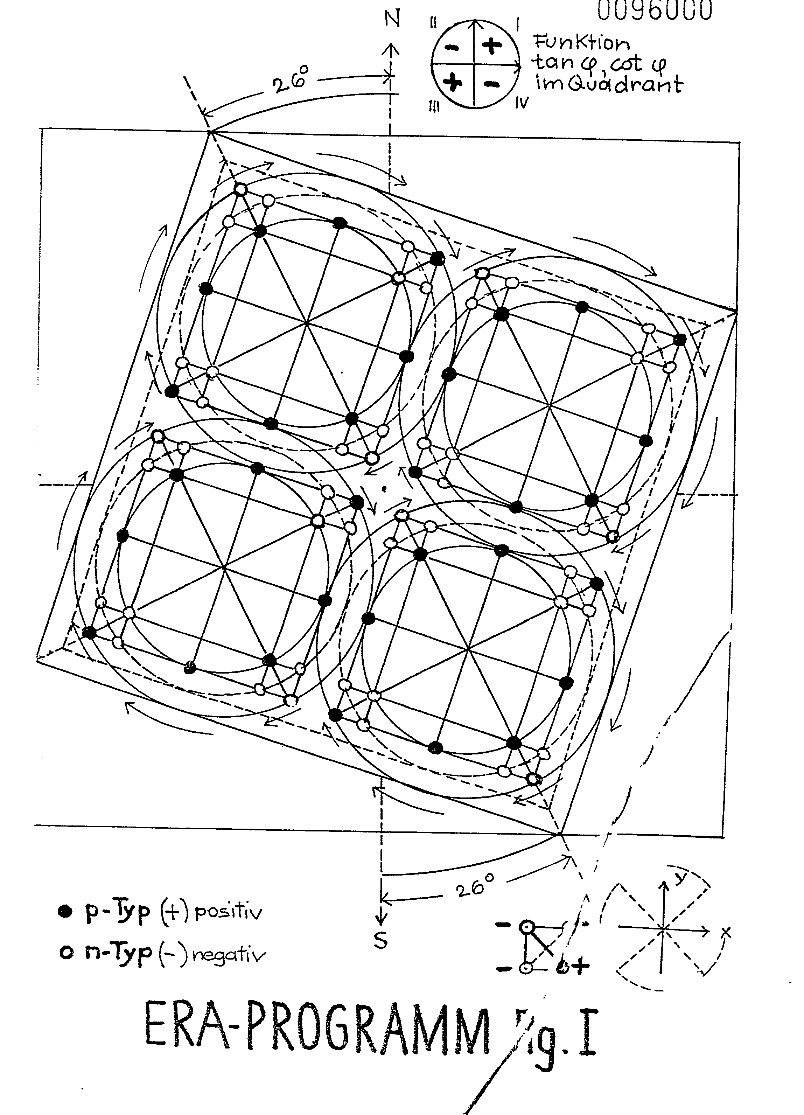

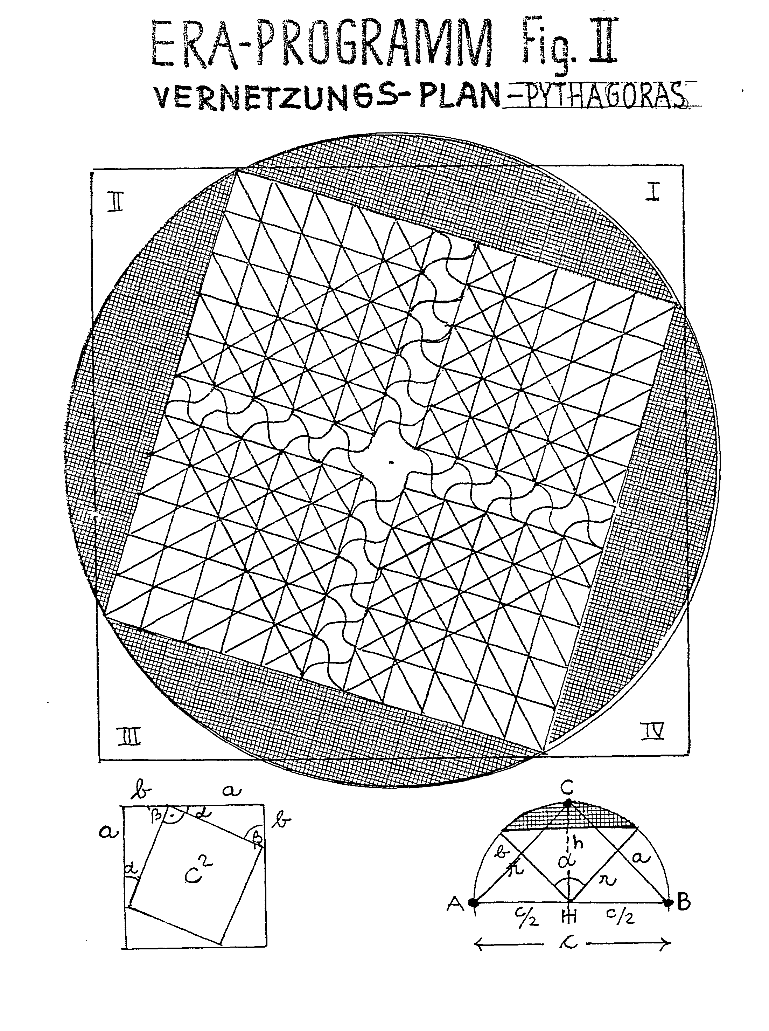

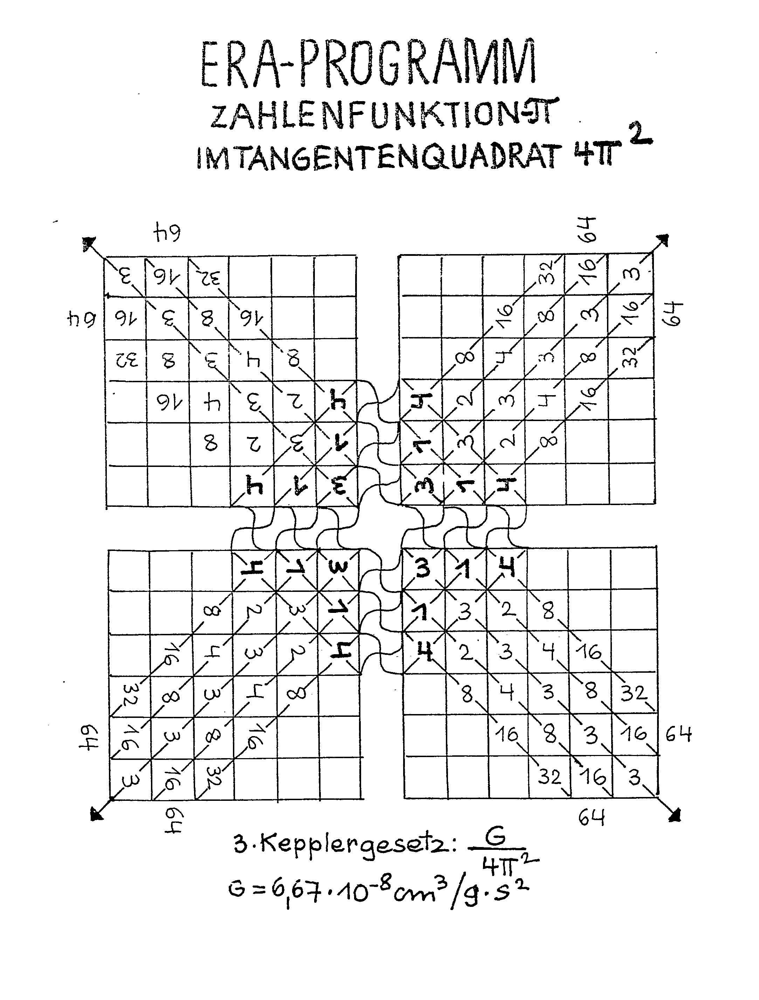

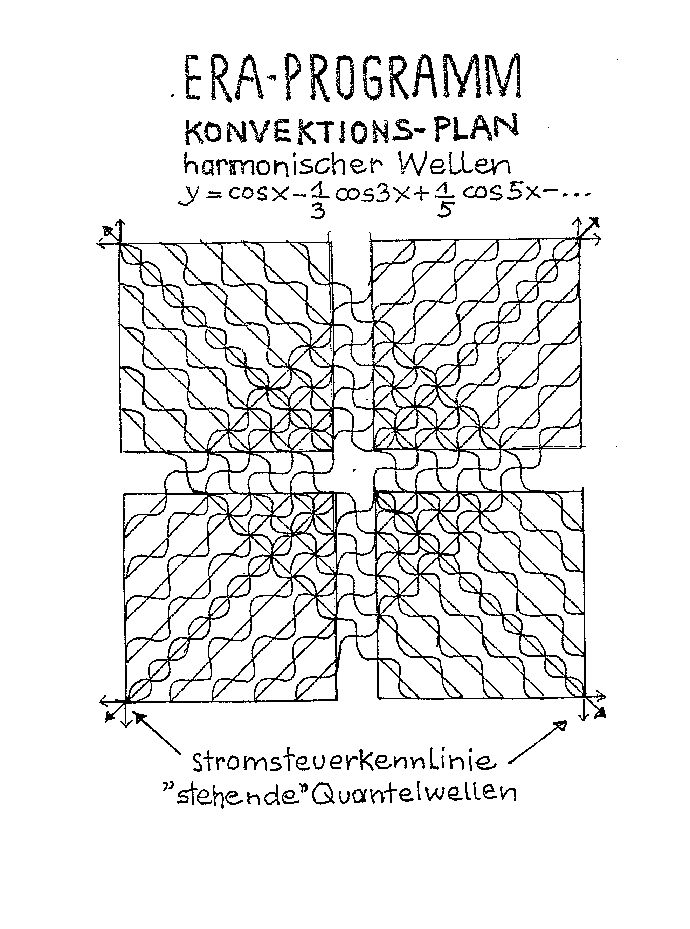

Der Elektronische Radantrieb ist eine Erfindung auf dem
Gebiet der Mikroelektronik und Schalttechnik, dessen Schaltprogramm nach den Gesetzen der Wellenmechanik a r b e i t e t
und in vier integrierten Schaltkreisen S t r o m  e r z e u g t
Wird der  F a h r p l a n  eingeschaltet - mit el. Anregerstrom -
und das Rad in mechanische Umdrehung versetzt - starten die
Elektronen auf ihren vorgeschriebenen Bahnen und tauschen auf
der Fahrt um den Kreisring viermal ihre Ladungen aus, wobei
jeweils Energie frei wird in Form eines positiven und eines
negativen, freibeweglichen Elektrons, das durch die Stromsteuerkennlinie (Diagonale) abgeleitet wird. Die vier Regelkreise
überschneiden sich in der Basis (Hauptachsen) und schalten dort
die Gegenbewegung ein - durch den Austausch der Ladungsträger!
So bewegt sich die Wellenmechanik mit "Rückstossantrieb"vorwärts
und erzeugt selbst die elektromotorische Kraft (EMK), die sie
zur Bewegung der Elektronen in einem Stromkreis benötigt. Die
beim Richtungswechsel der Feldlinien frei werdende Energie kann
abgeleitet werden  und dient den verschiedensten Anwendungszwecken. Die Abgabe der Ueberschussproduktion erfolgt nur in
bestimmten Mengen (Quanten) von der Grösse h.n .Solange der
Fahrplan eingeschaltet ist und das Programm läuft, läuft auch
die "sanfte Kettenreaktion" der elektromagnetischen Induktion.
(Siehe Konstruktionsplan Fig. 1 .) Sie funktioniert nach der
Quantenformel von Max Planck:

$$\varrho_\nu = \frac{8\pi\nu^2}{c^3}$$

ERA-PROGRAMM Fig. I

# ERA-PROGRAMM Fig. II
## VERNETZUNGS-PLAN — PYTHAGORAS

# ERA-PROGRAMM
## ZAHLENFUNKTION-π
## IMTANGENTENQUADRAT 4π²

$$3.\text{Kepplergesetz:} \quad \frac{G}{4\pi^2}$$

$$G = 6{,}67 \cdot 10^{-8}\,cm^3/g \cdot s^2$$

# ERA-PROGRAMM

## KONVEKTIONS-PLAN

### harmonischer Wellen

$$y = \cos x - \frac{1}{3}\cos 3x + \frac{1}{5}\cos 5x - \ldots$$

Stromsteuerkennlinie

"stehende" Quantelwellen

HARDWARE: STROMKREISLAUFPUMPEN

STATOR    ROTOR-SCHEIBEN   QUERZAPFEN-SPULEN:
vertikal + horizontal
HAUPTLAGER

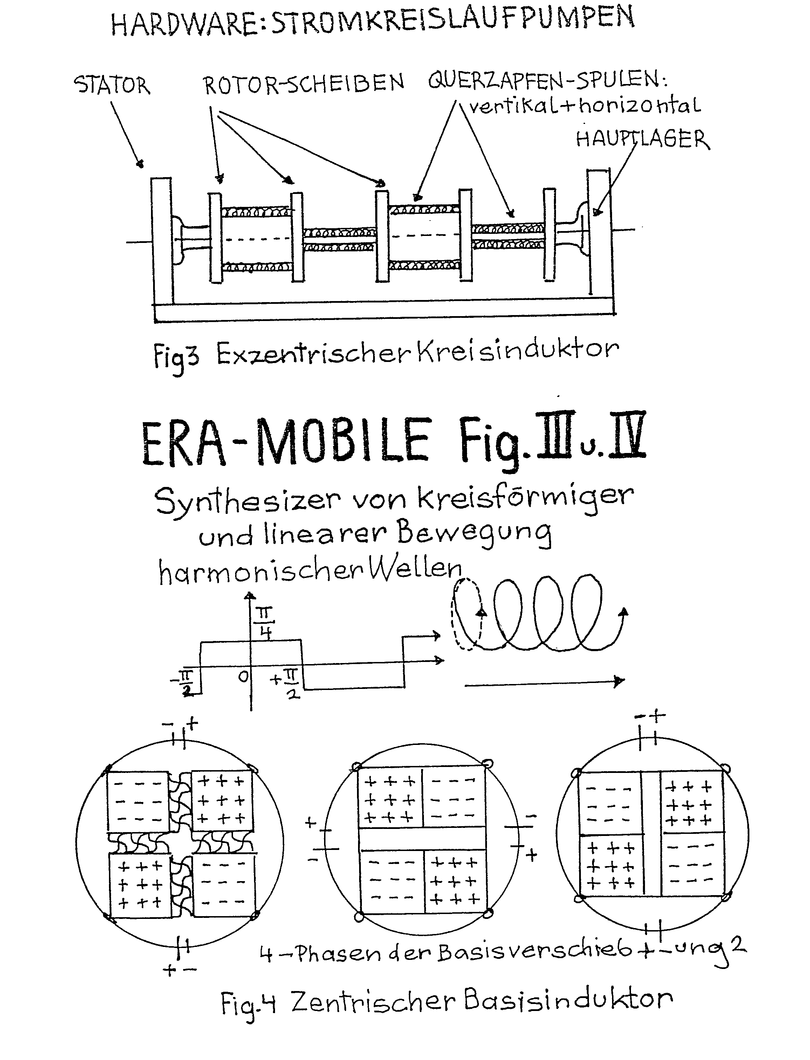

Fig 3  Exzentrischer Kreisinduktor

# ERA-MOBILE Fig. III u. IV

Synthesizer von kreisförmiger
und linearer Bewegung
harmonischer Wellen

$\frac{\pi}{4}$

$-\frac{\pi}{2}$   0   $+\frac{\pi}{2}$

4-Phasen der Basisverschieb+-ung 2

Fig.4 Zentrischer Basisinduktor

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 057 020 (WALLACE) <br> * Insgesamt * <br><br> --- | 1 | H 02 N 11/00 |
| A | DE-A-3 038 136 (KRÜGER) <br> * Insgesamt * <br><br> --- | 1 | |
| A | FR-A-2 500 233 (SALVY) <br> * Insgesamt * <br><br> ----- | 1 | |

RECHERCHIERTE
SACHGEBIETE (Int. Cl. 3)

H 02 N

Der vorliegende Recherchenbericht wurde für alle Patentansprüche erstellt.

| Recherchenort <br> DEN HAAG | Abschlußdatum der Recherche <br> 10-08-1983 | Prüfer <br> TIO K.H. |
|---|---|---|